# EUROPEAN PATENT APPLICATION

(11) **EP 3 453 735 A1**
(43) Date of publication of application: **13.03.2019**
(21) Application number: 17792722.5
(22) Date of filing: 26.04.2017
(51) Int. Cl.: C08G 77/20, C08L 83/05, C08L 83/06, C08L 83/07

(54) **ADHESION-IMPARTING AGENT AND CURABLE RESIN COMPOSITION**

(30) Priority: 02.05.2016 JP 2016092475
(71) Applicant: The Yokohama Rubber Co., Ltd., Minato-ku Tokyo 105-8685 (JP)
(72) Inventor: TSUSHIMA Daisuke, Hiratsuka City Kanagawa 254-8601 (JP); TAKEI Yoshihito, Hiratsuka City Kanagawa 254-8601 (JP); SAIKI Takeaki, Hiratsuka City Kanagawa 254-8601 (JP); ISHIKAWA Kazunori, Hiratsuka City Kanagawa 254-8601 (JP)
(74) Representative: Dilg, Haeusler, Schindelmann Patentanwaltsgesellschaft mbH
(86) International application number: PCT/JP2017/016485
(87) International publication number: WO 2017/191789

(57) **Abstract**

An object of the present invention is to provide an adhesion-imparting agent that exhibits excellent adhesive properties when the adhesion-imparting agent is used in a curable resin composition, and a curable resin composition containing the adhesion-imparting agent. The adhesion-imparting agent of an embodiment of the present invention is an organopolysiloxane represented by average unit formula (1) below.

(R¹¹R¹²SiO_{2/2})ₐ(R²SiO_{3/2})_{b}(R³SiO_{3/2})_{c}(R⁴O_{1/2})_{d} ··· (1)

In the average unit formula (1), R¹¹ and R¹² each independently represent an aryl group having from 6 to 20 carbons or an alkyl group having from 1 to 20 carbons, R² represents an alkenyl group, R³ represents an epoxy group-containing group or an oxetanyl group-containing group, and R⁴ represents a hydrogen atom or an alkyl group having from 1 to 10 carbons; and a, b, c, and d are each a positive number and satisfy relationship formulas of 0.80 ≤ a + b + c + d ≤ 1.00, c/(a + b + c) > 0.01, d/(a + b + c) > 0.02, and d/(2a + b + c + d) < 0.05.

## Description

### Technical Field

The present invention relates to an adhesion-imparting agent and a curable resin composition.

### Background Art

Optical semiconductor devices (hereinafter, also referred to as "LEDs") have characteristics such as a long operating life, low power consumption, shock resistance, rapid response, and capability to achieve lightness, thinness, and smallness, and have been dramatically applied in various fields, such as backlights of liquid crystal displays, cellular phones, and information terminals, lights for vehicles, indoor and outdoor advertisements, and indoor and outdoor lights.
An LED is typically produced by applying a curable resin composition to an optical semiconductor element and then curing this to seal the optical semiconductor element.

In such circumstances, for example, Patent Document 1 discloses an adhesion-promoting agent represented by a specific average unit formula (claim 1) and a curable organopolysiloxane composition containing the adhesion-promoting agent (claim 6).

### Citation List

### Patent Literature

Patent Document 1: JP 2007-327019 A

### Summary of Invention

### Technical Problem

Recently, as the level required for LEDs increases, exhibition of further adhesiveness (adhesiveness to LED packages) when a curable resin composition is cured is demanded for a curable resin composition which serves as a sealing material. Specifically, in the case of exposure to a hot and humid environment (the red ink test described below corresponds to its model test) and/or in the case of exposure to an environment where temperature is repeatedly changed (the heat shock test described below corresponds to its model test), exhibition of excellent adhesiveness is demanded.
In such circumstances, when the inventors of the present invention synthesized an adhesion-promoting agent (adhesion-imparting agent) by using a synthesis example of Patent Document 1 as a reference and used the adhesion-promoting agent in a curable resin composition, the inventors found that the adhesiveness does not necessarily satisfy the level that has been required recently.

Therefore, in light of such circumstances, an object of the present invention is to provide an adhesion-imparting agent that exhibits excellent adhesive properties when the adhesion-imparting agent is used in a curable resin composition, and a curable resin composition containing the adhesion-imparting agent.

### Solution to Problem

As a result of diligent research on the problems described above, the inventors of the present invention found that the problems described above can be solved by using an organopolysiloxane represented by a specific average unit formula as an adhesion-imparting agent, and thus completed the present invention.
Specifically, the inventors of the present invention found that the problems described above can be solved by the following features.
(1) An adhesion-imparting agent being an organopolysiloxane represented by average unit formula (1) below:

   (R¹¹R¹²SiO_{2/2})ₐ(R²SiO_{3/2})_{b}(R³SiO_{3/2})_{c}(R⁴O_{1/2})_{d} ··· (1)

   In the average unit formula (1), R¹¹ and R¹² each independently represent an aryl group having from 6 to 20 carbons or an alkyl group having from 1 to 20 carbons, R² represents an alkenyl group, R³ represents an epoxy group-containing group or an oxetanyl group-containing group, and R⁴ represents a hydrogen atom or an alkyl group having from 1 to 10 carbons; and a, b, c, and d are each a positive number and satisfy relationship formulas of 0.80 ≤ a + b + c + d ≤ 1.00, c/(a + b + c) > 0.01, d/(a + b + c) > 0.02, and d/(2a + b + c + d) < 0.05.
(2) The adhesion-imparting agent according to (1) above, where a proportion of an aryl group to all silicon atom-bonded groups is 5.0 mol% or greater.
(3) The adhesion-imparting agent according to (1) or (2) above, where, in the average unit formula (1), both R¹¹ and R¹² are phenyl groups.
(4) The adhesion-imparting agent according to (3) above, where diphenylsilane, diphenyldichlorosilane, diphenyldialkoxysilane, or diphenyldisilanol is used as a starting material.
(5) The adhesion-imparting agent according to (4) above, where diphenyldisilanol is used as the starting material.
(6) The adhesion-imparting agent according to any one of (1) to (5) above, where, in the average unit formula (1), the epoxy group-containing group or the oxetanyl group-containing group represented by R³ is a glycidoxyalkyl group, an epoxycycloalkyl group, or an oxetanylalkyl group-containing group.
(7) A curable resin composition including:
   an organopolysiloxane A having a silicon atom-bonded alkenyl group and a silicon atom-bonded aryl group;
   an organopolysiloxane B having a silicon atom-bonded hydrogen atom and a silicon atom-bonded aryl group;
   the adhesion-imparting agent described in any one of (1) to (6) above; and a hydrosilylation catalyst;
   a content of the adhesion-imparting agent being from 0.01 to 10 parts by mass per 100 parts by mass total of the organopolysiloxane A and the organopolysiloxane B.

### Advantageous Effects of Invention

As described below, according to the present invention, an adhesion-imparting agent that exhibits excellent adhesive properties when the adhesion-imparting agent is used in a curable resin composition, and a curable resin composition containing the adhesion-imparting agent can be provided.

### Description of Embodiments

The adhesion-imparting agent according to an embodiment of the present invention and the curable resin composition according to an embodiment of the present invention are described below.
Although the components described below may be described based on representative embodiments of the present invention, the present invention is not limited to such embodiments.
Note that in the present specification, numerical ranges indicated using "(from)... to..." include the former number as the lower limit value and the latter number as the upper limit value.
Furthermore, in the present specification, "organopolysiloxane" is also simply referred to as "polysiloxane".

### Adhesion-imparting agent

The adhesion-imparting agent according to an embodiment of the present invention is an organopolysiloxane represented by the average unit formula (1) described below (hereinafter, also referred to as "specific polysiloxane"). It is conceived that the adhesion-imparting agent according to an embodiment of the present invention exhibits excellent adhesive properties when the adhesion-imparting agent is used in a curable resin composition because the adhesion-imparting agent has such composition. Although the reason is not clear, as is clear from the average unit formula (1) described below, it is conceived that the specific polysiloxane has a siloxane unit having an epoxy group-containing group or an oxetanyl group-containing group as a so-called T-unit and has an appropriate amount of alkoxy group or hydroxy group, and the specific polysiloxane thus forms a firm network of polysiloxane when cured. As a result, the adhesion-imparting agent exhibits excellent adhesive properties when the adhesion-imparting agent is used in a curable resin composition.

### Average unit formula (1)

As described above, the adhesion-imparting agent according to an embodiment of the present invention is an organopolysiloxane represented by average unit formula (1) below (specific polysiloxane).

(R¹¹R¹²SiO_{2/2})ₐ(R²SiO_{3/2})_{b}(R³SiO_{3/2})_{c}(R⁴O_{1/2})_{d} ··· (1)

In the average unit formula (1) above, R¹¹ and R¹² each independently represent an aryl group having from 6 to 20 carbons or an alkyl group having from 1 to 20 carbons, R² represents an alkenyl group, R³ represents an epoxy group-containing group or an oxetanyl group-containing group, and R⁴ represents a hydrogen atom or an alkyl group having from 1 to 10 carbons. a, b, c, and d are each a positive number and satisfy relationship formulas of 0.80 ≤ a + b + c + d ≤ 1.00, c/(a + b + c) > 0.01, d/(a + b + c) > 0.02, and d/(2a + b + c + d) < 0.05.

The average unit formula (1) represents the number of moles of each siloxane unit when the total number of siloxane units constituting the specific polysiloxane is 1 mol. That is, the specific polysiloxane has the following siloxane units (a) to (d). Herein, the number of moles of each siloxane unit, when the total number of siloxane units constituting the specific polysiloxane is 1 mol, is indicated in the parenthesis.
(a) R¹¹R¹²SiO_{2/2} (a mole)
(b) R²SiO_{3/2} (b mole)
(c) R³SiO_{3/2} (c mole)
(d) R⁴O_{1/2} (d mole)

Note that, as described below, R⁴O_{1/2} represents an alkoxy group having from 1 to 10 carbons or a hydroxy group that is bonded to a silicon atom; however, in the present specification, R⁴O_{1/2} is treated as one type of siloxane unit.
Furthermore, as described below, the specific polysiloxane may have another siloxane unit except the siloxane units described above.

### Siloxane unit (a)

As described above, in the average unit formula (1), R¹¹ and R¹² each independently represent an aryl group having from 6 to 20 carbons (preferably from 6 to 10 carbons) or an alkyl group having from 1 to 20 carbons (preferably from 1 to 10 carbons). Examples of the aryl group having from 6 to 20 carbons include a phenyl group (hereinafter, also referred to as "Ph"), a tolyl group, a xylyl group, and a naphthyl group. Among these, from the perspective of achieving superior effect of the present invention, a phenyl group is preferable. Furthermore, examples of the alkyl group having from 1 to 20 carbons include a methyl group (hereinafter, also referred to as "Me"), an ethyl group, an n-propyl group, an isopropyl group, an n-butyl group, an isobutyl group, a sec-butyl group, a tert-butyl group, various pentyl groups, various hexyl groups, various octyl groups, various decyl groups, a cyclopentyl group, and a cyclohexyl group. Among these, from the perspective of achieving superior effect of the present invention, a methyl group is preferable.
From the perspective of achieving superior effect of the present invention, both R¹¹ and R¹² are preferably aryl groups having from 6 to 20 carbons, and more preferably phenyl groups.

From the perspective of achieving superior effect of the present invention, in the adhesion-imparting agent according to an embodiment of the present invention, preferably both R¹¹ and R¹² each have a siloxane unit, which is an aryl group having from 6 to 20 carbons (preferably a phenyl group), and a siloxane unit, which is an alkyl group having from 1 to 20 carbons (preferably a methyl group) as a siloxane unit (a).

### Siloxane unit (b)

As described above, in the average unit formula (1) above, R² represents an alkenyl group. Among these, from the perspective of achieving superior effect of the present invention, the number of carbons is preferably from 2 to 10. Specific examples of R² include a vinyl group (CH₂=CH-) (hereinafter, also represented by "Vi"), an allyl group, a butenyl group, a pentenyl group, a hexenyl group, and an octenyl group. Among these, a vinyl group is preferable.

### Siloxane unit (c)

As described above, in the average unit formula (1) above, R³ represents an epoxy group-containing group or an oxetanyl group-containing group.
R³ is not particularly limited as long as R³ is a group containing an epoxy group or an oxetanyl group; however, from the perspective of achieving superior effect of the present invention, R³ is preferably a glycidoxyalkyl group, an epoxycycloalkyl group, or an oxetanylalkyl group-containing group.

The glycidoxyalkyl group is preferably a group represented by Formula (R3a) below.

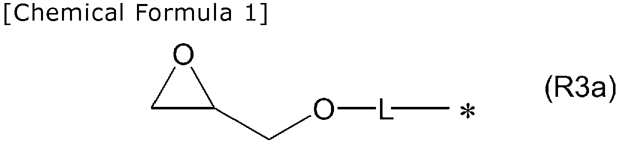

In Formula (R3a), L represents an alkylene group (preferably having from 1 to 10 carbons).
From the perspective of achieving superior effect of the present invention, the glycidoxyalkyl group is preferably a 3-glycidoxypropyl group (hereinafter, also referred to as "Ep").

The epoxycycloalkyl group is preferably an epoxycyclohexyl group.

The oxetanylalkyl group-containing group is preferably a group represented by Formula (3) below.

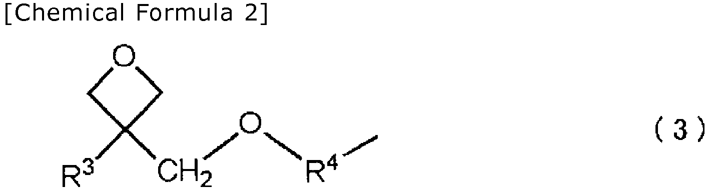

In Formula (3), R³ represents a hydrogen atom or an alkyl group (preferably having from 1 to 6 carbons), and R⁴ represents an alkylene group (preferably having from 1 to 6 carbons).

### Siloxane unit (d)

As described above, in the average unit formula (1) above, R⁴ represents a hydrogen atom or an alkyl group having from 1 to 10 carbons. Among these, from the perspective of achieving superior effect of the present invention, a hydrogen atom or an alkyl group having from 1 to 10 carbons (preferably having from 1 to 5 carbons) is preferable.

### a, b, c, and d

As described above, in the average unit formula (1) above, all of a, b, c, and d are positive numbers. That is, the specific polysiloxane has all of the siloxane units (a) to (d) described above.

As described above, in the average unit formula (1) above, a, b, c, and d satisfy the relationship formula of 0.80 ≤ a + b + c + d ≤ 1.00. That is, the specific polysiloxane may have another siloxane unit besides the siloxane units (a) to (d) described above as long as the siloxane units (a) to (d) described above account for at least 80 mol% among all the siloxane units constituting the specific polysiloxane.
From the perspective of achieving superior effect of the present invention, a + b + c + d is preferably 0.85 or greater, more preferably 0.90 or greater, even more preferably 0.95 or greater, and particular preferably 1.00. When a + b + c + d is 1.00, the specific polysiloxane includes the siloxane units (a) to (d) described above.
Examples of the siloxane unit except the siloxane units (a) to (d) described above include siloxane units (M), (D), (T), and (Q) described below.

As described above, in the average unit formula (1) above, a, b, c, and d satisfy the relationship formula of c/(a + b + c) > 0.01. That is, c/(a + b + c) is greater than 0.01. Among these, from the perspective of achieving superior effect of the present invention, c/(a + b + c) is preferably 0.05 or greater. Furthermore, c/(a + b + c) is preferably 0.50 or less, and more preferably 0.40 or less.

As described above, in the average unit formula (1) above, a, b, c, and d satisfy the relationship formula of d/(a + b + c) > 0.02. That is, d/(a + b + c) is greater than 0.02. Among these, from the perspective of achieving superior effect of the present invention, d/(a + b + c) is preferably 0.30 or less, and more preferably 0.15 or less.

As described above, in the average unit formula (1) above, a, b, c, and d satisfy the relationship formula of d/(2a + b + c + d) < 0.05. That is, d/(2a + b + c + d) is less than 0.05. Among these, from the perspective of achieving superior effect of the present invention, d/(2a + b + c + d) is preferably from 0.01 to 0.04, and more preferably from 0.02 to 0.03.

In the average unit formula (1) above, from the perspective of achieving superior effect of the present invention, a is preferably from 0.10 to 0.90, and more preferably from 0.50 to 0.80.
In the average unit formula (1) above, from the perspective of achieving superior effect of the present invention, b is preferably from 0.010 to 0.30, and more preferably from 0.05 to 0.20.
In the average unit formula (1) above, from the perspective of achieving superior effect of the present invention, c is preferably from 0.010 to 0.50, and more preferably from 0.050 to 0.30.
In the average unit formula (1) above, from the perspective of achieving superior effect of the present invention, d is preferably from 0.020 to 0.20.

### Proportion (B)

The proportion of an aryl group to all silicon atom-bonded groups (hereinafter, also referred to as "proportion B") is not particularly limited; however, from the perspective of achieving superior effect of the present invention, the proportion is preferably 5.0 mol% or greater. Note that, the wording "all silicon atom-bonded groups" indicates all groups (substituents) that are bonded to silicon atoms of each of the siloxane units and includes a hydrogen atom.

From the perspective of achieving superior effect of the present invention, the proportion B is preferably from 10.0 to 90.0 mol%, and more preferably from 20.0 to 50.0 mol%.

### Preferred embodiment

An example of the preferred embodiment of the specific polysiloxane is an organopolysiloxane represented by Formula (1a) below (hereinafter, also referred to as "specific polysiloxane 1").

(R¹¹R¹²SiO_{2/2})ₐ(R²SiO_{3/2})_{b}(R³SiO_{3/2})_{c}(R⁴O_{1/2})_{d}(R^{M}₃SiO_{1/2})_{M} (R^{D}₂SiO_{2/2})_{D}(R^{T}SiO_{3/2})_{T}(SiO_{4/2})_{Q} ··· (1a)

In the average unit formula (1a) above, R¹¹ and R¹² each independently represent an aryl group having from 6 to 20 carbons or an alkyl group having from 1 to 20 carbons, R² represents an alkenyl group, R³ represents an epoxy group-containing group or an oxetanyl group-containing group, and R⁴ represents a hydrogen atom or an alkyl group having from 1 to 10 carbons. R^{M} represents a hydrogen atom or an organic group, R^{D} represents a hydrogen atom or an organic group (but except aryl groups having from 6 to 20 carbons and alkyl groups having from 1 to 20 carbons), and R^{T} represents a hydrogen atom or an organic group (but except alkenyl groups, epoxy group-containing groups, and oxetanyl group-containing groups). a, b, c, and d are each a positive number and satisfy relationship formulas of 0.80 ≤ a + b + c + d ≤ 1.00, c/a + b + c > 0.01, and d/a + b + c > 0.02. M, D, T, and Q are each from 0 to 0.1. a, b, c, d, M, D, T, and Q satisfy the relationship formula of a + b + c + d + M + D + T + Q = 1. However, the proportion of R⁴O- to all silicon atom-bonded groups is 5.0 mol% or less.

The specific polysiloxane 1 has the following siloxane units (a) to (d), (M), (D), (T), and (Q). Herein, the number of moles of each siloxane unit, when the total number of siloxane units constituting the specific polysiloxane 1 is 1 mol, is indicated in the parentheses.
(a) R¹¹R¹²SiO_{2/2} (a mole)
(b) R²SiO_{3/2} (b mole)
(c) R³SiO_{3/2} (c mole)
(d) R⁴O_{1/2} (d mole)
(M) R^{M}₃SiO_{1/2} (M mole)
(D) R^{D}₂SiO_{2/2} (D mole)
(T) R^{T}SiO_{3/2} (T mole)
(Q) SiO_{4/2} (Q mole)

Note that the siloxane unit (M) is a so-called M unit, the siloxane units (a) and (D) are so-called D units, the siloxane units (b), (c), and (T) are so-called T units, and the siloxane unit (Q) is a so-called Q unit.

The siloxane units (a) to (d), a, b, c, and d, and the proportion (B) are as described above, and the specific examples and preferred embodiments thereof are the same.

As described above, in the average unit formula (1a) above, R^{M} represents a hydrogen atom or an organic group. The organic group is not particularly limited, and examples thereof include groups represented by R¹¹, R¹², R², R³, and R⁴ in the average unit formula (1) described above, and the like.
As described above, in the average unit formula (1a) above, R^{D} represents a hydrogen atom or an organic group (but except aryl groups having from 6 to 20 carbons and alkyl groups having from 1 to 20 carbons). Examples of the organic group include groups represented by R² and R³ in the average unit formula (1) described above.
As described above, in the average unit formula (1a) above, R^{T} represents a hydrogen atom or an organic group (but except alkenyl groups, epoxy group-containing groups, and oxetanyl group-containing groups). The organic group is not particularly limited, and examples thereof include groups represented by R¹¹, R¹², and R⁴ in the average unit formula (1) described above, and the like.

As described above, in the average unit formula (1a) above, all of M, D, T, and Q are from 0 to 0.1. That is, the specific polysiloxane 1 may or may not have the siloxane units (M), (D), (T), and (Q).

As described above, in the average unit formula (1a) above, a, b, c, d, M, D, T, and Q satisfy the relationship formula of a + b + c + d + M + D + T + Q = 1. That is, the specific polysiloxane 1 is an organopolysiloxane including the siloxane units (a) to (d), (M), (D), (T), and (Q).

In the average unit formula (1a) above, from the perspective of achieving superior effect of the present invention, M, D, T, and Q are each independently preferably 0.050 or less, more preferably 0.010 or less, and even more preferably 0.

### Molecular weight

The weight average molecular weight (Mw) of the specific polysiloxane is not particularly limited but is preferably from 1000 to 300000, and more preferably from 1000 to 100000, from the perspective of achieving superior effect of the present invention.

In the present invention, the weight average molecular weight is the weight average molecular weight indicated by the molecular weight of polystyrene as determined by gel permeation chromatography (GPC) using chloroform as a solvent.

### Synthesizing method

The synthesizing method of the specific polysiloxane is not particularly limited and, for example, synthesis can be performed by subjecting various silanes (monomers) to hydrolysis-condensation.

Examples of the method of adjusting c/(a + b + c) to a desired range include a method of adjusting the amount of silane having an epoxy group-containing group or an oxetanyl group-containing group that is used in the synthesis, and the like.

Examples of the method of adjusting d/(a + b + c) and d/(2a + b + c + d) to a desired range include a method of adjusting the amount of water used during the synthesis, the reaction temperature, and the reaction time, and the like.

### Preferred embodiment

From the perspective of achieving superior effect of the present invention, the specific polysiloxane preferably is one in which diphenylsilane, diphenyldichlorosilane, diphenyldialkoxysilane, or diphenyldisilanol (diphenylsilanediol) is used as a starting material (monomer to be a raw material), and more preferably is one in which diphenyldisilanol is used as a starting material.

### Curable resin composition

The curable resin composition according to an embodiment of the present invention (hereinafter, also simply referred to as "composition according to an embodiment of the present invention") contains:
(A) an organopolysiloxane A (hereinafter, also referred to as "polysiloxane A") having a silicon atom-bonded alkenyl group and a silicon atom-bonded aryl group;
(B) an organopolysiloxane B (hereinafter, also referred to as "polysiloxane B") having a silicon atom-bonded hydrogen atom and a silicon atom-bonded aryl group;
(C) the adhesion-imparting agent described above; and
(D) a hydrosilylation catalyst.

Note that the content of the adhesion-imparting agent is from 0.01 to 10 parts by mass per 100 parts by mass total of the polysiloxane A and the polysiloxane B.

Note that it is conceived that the composition according to an embodiment of the present invention exhibits curability because the polysiloxane A, the polysiloxane B, and the adhesion-imparting agent can be addition-reacted (hydrosilylation-reacted) by the hydrosilylation catalyst.

Each component is described in detail below.

### (A) Polysiloxane A

The polysiloxane A contained in the composition according to an embodiment of the present invention is not particularly limited as long as the polysiloxane A is an organopolysiloxane having a silicon atom-bonded alkenyl group and a silicon atom-bonded aryl group. Note that the silicon atom means a silicon atom of siloxane.

Note that the polysiloxane is preferably an organopolysiloxane except the specific polysiloxane described above. Especially, the polysiloxane is more preferably an organopolysiloxane that does not have "a T unit having an epoxy group-containing group or an oxetanyl group-containing group", such as the siloxane unit (c) described above.

### Alkenyl group

Examples of the alkenyl group include alkenyl groups having from 2 to 18 carbons, such as a vinyl group, an allyl group, a butenyl group, a pentenyl group, a hexenyl group, and an octenyl group, and a vinyl group is preferable.

The amount of the alkenyl group per molecule is preferably from 2 to 12 mass%, and more preferably from 3 to 10 mass%.

### Aryl group

Examples of the aryl group include aryl groups having from 6 to 18 carbons, such as a phenyl group, a tolyl group, and a xylyl group, and a phenyl group is preferable.

Preferably, at least 30 mol% of all silicon atom-bonded organic groups are aryl groups and, more preferably, at least 40 mol% thereof are aryl groups. As a result, not only does the resulting cured product have low attenuation due to the diffraction, reflection, scattering, or the like of light, but the substance has excellent compatibility with the polysiloxane B described below, reduced turbidity or the like, and excellent transparency of the cured product.

### Other group

Examples of other groups binding to silicon atoms of the polysiloxane A include substituted or unsubstituted monovalent hydrocarbon groups excluding alkenyl groups and aryl groups, and specific examples include alkyl groups having from 1 to 18 carbons, such as a methyl group, an ethyl group, an n-propyl group, an isopropyl group, an n-butyl group, an isobutyl group, a sec-butyl group, a tert-butyl group, various pentyl groups, various hexyl groups, various octyl groups, various decyl groups, a cyclopentyl group, and a cyclohexyl group; aralkyl groups having from 7 to 18 carbons, such as a benzyl group and a phenethyl group; and halogenated alkyl groups having from 1 to 18 carbons, such as a 3-chloropropyl group and a 3,3,3-trifluoropropyl group; and the like. The substance may also contain small amounts of other groups such as silicon atom-bonded hydroxy groups or silicon atom-bonded alkoxy groups. Examples of the alkoxy groups include a methoxy group, an ethoxy group, a propoxy group, and a butoxy group.

### Preferred embodiment

Examples of the preferable embodiment of the polysiloxane A include an organopolysiloxane represented by average unit formula (A) below. Note that the average unit formula (A) represents the number of moles of each siloxane unit when the total number of siloxane units constituting the polysiloxane A is 1 mol.

(R³SiO_{3/2})ₐ(R³₂SiO_{2/2})_{b}(R³₃SiO_{1/2})_{c}(SiO_{4/2})_{d}(X¹O_{1/2})ₑ ··· (A)

In Formula (A) above, each R3 moiety is independently a hydrogen atom or a substituted or unsubstituted monovalent hydrocarbon group. Examples of this monovalent hydrocarbon group include alkyl groups having from 1 to 18 carbons such as a methyl group, an ethyl group, an n-propyl group, an isopropyl group, an n-butyl group, an isobutyl group, a sec-butyl group, a tert-butyl group, various pentyl groups, various hexyl groups, various octyl groups, various decyl groups, cyclopentyl groups, and cyclohexyl groups; alkenyl groups having from 2 to 18 carbons such as a vinyl group, an allyl group, a butenyl group, a pentenyl group, a hexenyl group, and an octenyl group; aryl groups having from 6 to 18 carbons such as a phenyl group, a tolyl group, and a xylyl group; aralkyl groups having from 7 to 18 carbons such as a benzyl group and a phenethyl group; and halogenated alkyl groups having from 1 to 18 carbons such as a 3-chloropropyl group and a 3,3,3-trifluoropropyl group.
However, it is preferable for at least 1 (preferably at least 2) of the R³ moieties per molecule to be alkenyl group(s) and for the amount of R³ in the form of alkenyl groups to be from 2 to 12 mass%, and the amount is more preferably from 3 to 10 mass%.
Furthermore, it is also preferable for at least one R³ moiety per molecule to be an aryl group and for at least 30 mol% of all of the R³ moieties to be aryl groups, and it is more preferable for at least 40 mol% to be aryl groups.

In Formula (A) above, X¹ is a hydrogen atom or an alkyl group. Examples of this alkyl group include alkyl groups having from 1 to 18 carbons such as methyl groups, ethyl groups, n-propyl groups, isopropyl groups, n-butyl groups, isobutyl groups, sec-butyl groups, tert-butyl groups, various pentyl groups, various hexyl groups, various octyl groups, various decyl groups, cyclopentyl groups, and cyclohexyl groups, and methyl groups are preferable.

In Formula (A), a is 0 or a positive number, b is 0 or a positive number, c is 0 or a positive number, d is 0 or a positive number, and e is 0 or a positive number. a + b + c + d + e is 1 or less. b/a is preferably a number in a range of 0 to 10, c/a is preferably a number in a range of 0 to 5, d/(a + b + c + d) is preferably a number in a range of 0 to 0.3, and e/(a + b + c + d) is preferably a number in a range of 0 to 0.4.

### Molecular weight

The weight average molecular weight (Mw) of the polysiloxane A is preferably from 1000 to 300000, and more preferably from 1000 to 100000.

### Content

In the composition according to an embodiment of the present invention, the content of the polysiloxane A is not particularly limited; however, from the perspective of achieving superior effect of the present invention, the content is preferably from 10 to 90 mass%, and more preferably from 50 to 80 mass%, relative to the total amount of the composition.

### (B) Polysiloxane B

The polysiloxane B contained in the composition according to an embodiment of the present invention is not particularly limited as long as the polysiloxane B is an organopolysiloxane having a silicon atom-bonded hydrogen atom and a silicon atom-bonded aryl group. Note that the silicon atom means a silicon atom of siloxane.

The specific examples and preferred embodiments of the aryl are the same as those of the polysiloxane A described above.

Furthermore, the specific examples and preferred embodiments of other groups binding to silicon atoms in the polysiloxane B are the same as those of the polysiloxane A described above.

Furthermore, the preferred embodiments of the molecular weight of the polysiloxane B are the same as those of the polysiloxane A described above.

### Preferred embodiment

Examples of the preferable embodiment of the polysiloxane B include an organopolysiloxane represented by average unit formula (B) below. Note that the average unit formula (B) represents the number of moles of each siloxane unit when the total number of siloxane units constituting the polysiloxane B is 1 mol.

(R³SiO_{3/2})ₐ(R³₂SiO_{2/2})_{b}(R³₃SiO_{1/2})_{c}(SiO_{4/2})_{d}(X¹O_{1/2})ₑ ··· (B)

In Formula (B) above, each R³ moiety is independently a hydrogen atom or a substituted or unsubstituted monovalent hydrocarbon group. The specific examples of the monovalent hydrocarbon group are the same as those exemplified for R³ in the Formula (A) above.
However, it is preferable for at least 1 (preferably at least 2) of the R³ moieties per molecule to be hydrogen atom(s).
Furthermore, it is also preferable for at least one R³ moiety per molecule to be an aryl group and for at least 30 mol% of all of the R³ moieties to be aryl groups, and it is more preferable for at least 40 mol% to be aryl groups.

In Formula (B), a is 0 or a positive number, b is 0 or a positive number, c is 0 or a positive number, d is 0 or a positive number, and e is 0 or a positive number. a + b + c + d + e is 1 or less. The preferred embodiments of a, b, c, d, and e are the same as those described for a, b, c, d, and e in the Formula (A) above.

### Si-H/Si-Vi Molar ratio

The molar ratio of the silicon atom-bonded hydrogen atom of the polysiloxane B to the silicon atom-bonded alkenyl group of the polysiloxane A described above (hereinafter, also referred to as "Si-H/Si-Vi molar ratio" for convenience) is not particularly limited; however, from the perspective of achieving superior effect of the present invention, the molar ratio is preferably from 0.05 to 5.00, more preferably from 0.10 to 2.00, even more preferably from 0.50 to 1.50, and particularly preferably from 0.70 to 1.10.

### (C) Adhesion-imparting agent

The adhesion-imparting agent is as described above.

In the composition according to an embodiment of the present invention, the content of the adhesion-imparting agent is from 0.01 to 10 parts by mass per 100 parts by mass total of the polysiloxane A and the polysiloxane B. Among these, from the perspective of achieving superior effect of the present invention, the content is preferably from 0.1 to 8 parts by mass, and more preferably from 1 to 5 parts by mass.

### (D) Hydrosilylation catalyst

The hydrosilylation catalyst contained in the composition according to an embodiment of the present invention functions as a catalyst that promotes the addition reaction (hydrosilylation reaction) of the polysiloxane A, the polysiloxane B, and the adhesion-imparting agent.

A known catalyst can be used as the hydrosilylation catalyst. Examples thereof include platinum catalysts, rhodium catalysts, and palladium catalysts, and platinum catalysts are preferable. Specific examples of platinum catalysts include chloroplatinic acid, chloroplatinic acid-olefin complexes, chloroplatinic acid-divinyltetramethyldisiloxane complexes, chloroplatinic acid-alcohol coordination compounds, diketone complexes of platinum, and platinum divinyltetramethyldisiloxane complexes. One type of these may be used alone or two or more types of these may be used in combination.

The content of the hydrosilylation catalyst is not particularly limited; however, from the perspective of achieving excellent curability of the composition according to an embodiment of the present invention, the content is preferably from 0.0000001 to 0.1 parts by mass, and more preferably from 0.000001 to 0.01 parts by mass, per 100 parts by mass total of the polysiloxane A and the polysiloxane B.

When the hydrosilylation catalyst is a platinum catalyst, the content of the hydrosilylation catalyst is preferably an amount that makes the mass of the platinum atom contained in the hydrosilylation catalyst 0.1 to 100 ppm, and more preferably 1 to 10 ppm, relative to the mass of the entire composition.

### Optional component

The composition according to an embodiment of the present invention may further contain a component besides the components described above. Examples of such a component include the following components.

### Curing retarder

The composition according to an embodiment of the present invention may further contain a curing retarder. The curing retarder is a component for adjusting the curing speed or the working life of the composition according to an embodiment of the present invention. Examples thereof include alcohol derivatives containing a carbon-carbon triple bond, such as 3-methyl-1-butyn-3-ol, 3,5-dimethyl-1-hexyn-3-ol, phenylbutynol, and 1-ethynyl-1-cyclohexanol; enyne compounds, such as 3-methyl-3-penten-1-yne and 3,5-dimethyl-3-hexen-1-yne; alkenyl group-containing low molecular weight siloxanes, such as tetramethyltetravinylcyclotetrasiloxane and tetramethyltetrahexenylcyclotetrasiloxane; alkyne-containing silanes, such as methyl-tris(3-methyl-1-butyn-3-oxy)silane and vinyl-tris(3-methyl-1-butyn-3-oxy)silane; and the like. One type of these curing retarders may be used alone, or two or more types may be used in combination.

In the composition according to an embodiment of the present invention, the content of the curing retarder is not particularly limited but is preferably from 100 to 10000 ppm, and more preferably from 300 to 800 ppm, relative to the total amount of the composition.

### Additives

The composition according to an embodiment of the present invention may further contain additives, such as UV absorbents, fillers (in particular, silica), anti-aging agents, antistatic agents, flame retardants, adhesion-imparting agents, dispersants, antioxidants, antifoaming agents, matting agents, photostabilizers, dyes, pigments, organic phosphors, and inorganic phosphors in a range that does not impair the object of the present invention.

Among these additives, use of silica as the filler is preferable.

Note that type of the silica is not particularly limited, and examples thereof include wet silica (hydrous silicic acid), dry silica (silicic anhydride), calcium silicate, and aluminum silicate.

### Production method of curable resin composition

The production method of the composition according to an embodiment of the present invention is not particularly limited, and an example is a method of producing the composition by mixing the essential components and optional components described above.

### Use

The composition according to an embodiment of the present invention may be used as an adhesive, a primer, a sealant, or the like in fields such as, for example, display materials, optical recording medium materials, optical device materials, optical part materials, optical fiber materials, optical-electronic function organic materials, and semiconductor integrated circuit peripheral materials.

In particular, the composition according to an embodiment of the present invention can be suitably used in sealing materials of LED packages. Especially, the composition is suitably used in LED packages that use PolyCyclohexylene-dimethylene Terephthalate (PCT) and/or Epoxy Molding Compound (EMC) in raw materials of the packages.
Examples of the method of use of the composition according to an embodiment of the present invention include a process in which the composition according to an embodiment of the present invention is applied to an LED package and then the LED package to which the composition according to an embodiment of the present invention has been applied is heated to cure the composition according to an embodiment of the present invention. At this time, the composition may be cured in a sheet shape. Furthermore, the method of curing the composition according to an embodiment of the present invention is not particularly limited, and an example is a method of heating the composition according to an embodiment of the present invention at 80 to 200°C for 10 minutes to 720 minutes.

### Examples

The present invention is described in further detail below by using examples. However, the present invention is not limited to these examples.

### Synthesis of adhesion-imparting agent

The adhesion-imparting agents C1 to C6 (Examples) and X7 to X11 (Comparative Examples) were synthesized as described below.

### Synthesis Example 1

In a 500 mL flask equipped with a thermometer, a stirrer, and a reflux condenser, 97.7 g (0.30 mol) of diphenyldimethoxysilane, 48.1 g (0.50 mol) of dimethyldimethoxysilane, 14.8 g (0.10 mol) of trimethoxyvinylsilane, 23.6 g (0.10 mol) of 3-glycidoxypropyltrimethoxysilane, 39.6 g (2.2 mol) of distilled water, and 0.6 g of sodium hydroxide were mixed. Thereafter, agitation was performed at 50°C for 6 hours (hrs), then 184 g of toluene was added and agitated, and then the mixture was allowed to stand still. After being left to stand still, the liquid separation was performed to take out an organic layer, and KW700 (available from Kyowa Chemical Industry Co., Ltd.) was added thereto until the mixture became neutral. After the neutralization, the toluene was removed to obtain an adhesion-imparting agent of the following average unit formula. The obtained adhesion-imparting agent was used as an adhesion-imparting agent C1.

(Ph₂SiO_{2/2})_{0.29}(Me₂SiO_{2/2})_{0.49}(ViSiO_{3/2})_{0.09}(EpSiO_{3/2})_{0.09}(RO_{1/2})_{0.04}

Note that R represents a hydrogen atom or a methyl group.

### Synthesis Example 2

An adhesion-imparting agent of the following average unit formula was obtained in accordance with the same procedure in Synthesis Example 1 except for changing the diphenyldimethoxysilane to diphenylsilane. The obtained adhesion-imparting agent was used as an adhesion-imparting agent C2.

(Ph₂SiO_{2/2})_{0.29}(Me₂SiO_{2/2})_{0.49}(ViSiO_{3/2})_{0.09}(EpSiO_{3/2})_{0.09}(RO_{1/2})_{0.04}

Note that R represents a hydrogen atom or a methyl group.

### Synthesis Example 3

An adhesion-imparting agent of the following average unit formula was obtained in accordance with the same procedure in Synthesis Example 1 except for changing the diphenyldimethoxysilane to diphenyldichlorosilane. The obtained adhesion-imparting agent was used as an adhesion-imparting agent C3.

(Ph₂SiO_{2/2})_{0.29}(Me₂SiO_{2/2})_{0.49}(ViSiO_{3/2})_{0.09}(EpSiO_{3/2})_{0.09}(RO_{1/2})_{0.04}

Note that R represents a hydrogen atom or a methyl group.

### Synthesis Example 4

An adhesion-imparting agent of the following average unit formula was obtained in accordance with the same procedure in Synthesis Example 1 except for changing the diphenyldimethoxysilane to diphenylsilane diol. The obtained adhesion-imparting agent was used as an adhesion-imparting agent C4.

(Ph₂SiO_{2/2})_{0.29}(Me₂SiO_{2/2})_{0.49}(ViSiO_{3/2})_{0.09}(EpSiO_{3/2})_{0.09}(RO_{1/2})_{0.04}

Note that R represents a hydrogen atom or a methyl group.

### Synthesis Example 5

In a 500 mL flask equipped with a thermometer, a stirrer, and a reflux condenser, 145.8 g (0.80 mol) of dimethoxyphenylmethylsilane, 14.8 g (0.10 mol) of trimethoxyvinylsilane, 23.6 g (0.10 mol) of 3-glycidoxypropyltrimethoxysilane, 39.6 g (2.2 mol) of distilled water, and 0.6 g of sodium hydroxide were mixed. Thereafter, the mixture was agitated at 50°C for 6 hrs, and then 184 g of toluene was added and agitated, and then allowed to stand still. After being left to stand still, the liquid separation was performed to take out an organic layer, and KW700 (available from Kyowa Chemical Industry Co., Ltd.) was added thereto until the mixture became neutral. After the neutralization, the toluene was removed to obtain an adhesion-imparting agent of the following average unit formula. The obtained adhesion-imparting agent was used as an adhesion-imparting agent C5.

(PhMeSiO_{2/2})_{0.78}(ViSiO_{3/2})_{0.09}(EpSiO_{3/2})_{0.09}(RO_{1/2})_{0.04}

Note that R represents a hydrogen atom or a methyl group.

### Synthesis Example 6

In a 500 mL flask equipped with a thermometer, a stirrer, and a reflux condenser, 48.8 g (0.20 mol) of diphenyldimethoxysilane, 36.0 g (0.30 mol) of dimethyldimethoxysilane, 29.6 g (0.20 mol) of trimethoxyvinylsilane, 70.9 g (0.30 mol) of 3-glycidoxypropyltrimethoxysilane, 45 g (2.5 mol) of distilled water, and 0.6 g of sodium hydroxide were mixed. Thereafter, the mixture was agitated at 50°C for 6 hrs, and then 184 g of toluene was added and agitated, and then allowed to stand still. After being left to stand still, the liquid separation was performed to take out an organic layer, and KW700 (available from Kyowa Chemical Industry Co., Ltd.) was added thereto until the mixture became neutral. After the neutralization, the toluene was removed to obtain an adhesion-imparting agent of the following average unit formula. The obtained adhesion-imparting agent was used as an adhesion-imparting agent C6.

(Ph₂SiO_{2/2})_{0.19}(Me₂SiO_{2/2})_{0.29}(ViSiO_{3/2})_{0.19}(EpSiO_{3/2})_{0.29}(RO_{1/2})_{0.04}

Note that R represents a hydrogen atom or a methyl group.

### Synthesis Example 7

In a 500 mL flask equipped with a thermometer, a stirrer, and a reflux condenser, 97.7 g (0.30 mol) of diphenyldimethoxysilane, 48.1 g (0.50 mol) of dimethyldimethoxysilane, 9.3 g (0.05 mol) of 1,3-divinyltetramethyldisiloxane, 0.2 g of trifluoromethanesulfonic acid, and 28.8 g (1.6 mol) of distilled water were mixed. Thereafter, the mixture was agitated at 70°C for 3 hrs, and then 0.2 g of KOH and 23.6 g (0.10 mol) of 3-glycidoxypropyltrimethoxysilane were added and then allowed to further react at 50°C for 6 hrs. After being left to stand still, the aqueous layer and the organic layer were separated, and KW700 (available from Kyowa Chemical Industry Co., Ltd.) was added to the organic layer until the mixture became neutral. After the neutralization, the toluene was removed to obtain an adhesion-imparting agent of the following average unit formula. The obtained adhesion-imparting agent was used as an adhesion-imparting agent X7.

(Ph₂SiO_{2/2})_{0.29}(Me₂SiO_{2/2})_{0.49}(EpSiO_{3/2})_{0.09}(RO_{1/2})_{0.04}(ViMeSiO_{1/2})_{0.09}

Note that R represents a hydrogen atom or a methyl group.

### Synthesis Example 8

In a 500 mL flask equipped with a thermometer, a stirrer, and a reflux condenser, 97.7 g (0.50 mol) of diphenyldimethoxysilane, 48.1 g (0.30 mol) of dimethyldimethoxysilane, 28.9 g (0.195 mol) of trimethoxyvinylsilane, 1.18 g (0.005 mol) of 3-glycidoxypropyltrimethoxysilane, 39.6 g (2.2 mol) of distilled water, and 0.6 g of sodium hydroxide were mixed. Thereafter, the mixture was agitated at 50°C for 6 hrs, and then 184 g of toluene was added and agitated, and then allowed to stand still. After being left to stand still, the liquid separation was performed to take out an organic layer, and KW700 (available from Kyowa Chemical Industry Co., Ltd.) was added thereto until the mixture became neutral. After the neutralization, the toluene was removed to obtain an adhesion-imparting agent of the following average unit formula. The obtained adhesion-imparting agent was used as an adhesion-imparting agent X8.

(Ph₂SiO_{2/2})_{0.48}(Me₂SiO_{2/2})_{0.28}(ViSiO_{3/2})_{0.195}(EpSiO_{3/2})_{0.005}(RO_{1/2})_{0.04}

Note that R represents a hydrogen atom or a methyl group.

### Synthesis Example 9

In a 500 mL flask equipped with a thermometer, a stirrer, and a reflux condenser, 97.7 g (0.50 mol) of diphenyldimethoxysilane, 48.1 g (0.30 mol) of dimethyldimethoxysilane, 14.8 g (0.10 mol) of trimethoxyvinylsilane, 23.6 g (0.10 mol) of 3-glycidoxypropyltrimethoxysilane, 39.6 g (2.2 mol) of distilled water, and 0.6 g of sodium hydroxide were mixed. Thereafter, the mixture was agitated at 50°C for 6 hrs, and then 184 g of toluene was added and agitated, and then heated to 140°C to continue the reaction until no water is generated. The mixture was left to cool to room temperature, and KW700 (available from Kyowa Chemical Industry Co., Ltd.) was added thereto until the mixture became neutral. After the neutralization, the toluene was removed to obtain an adhesion-imparting agent of the following average unit formula. The obtained adhesion-imparting agent was used as an adhesion-imparting agent X9.

(Ph₂SiO_{2/2})_{0.50}(Me₂SiO_{2/2})_{0.30}(ViSiO_{3/2})_{0.10}(EpSiO_{3/2})_{0.10}

### Synthesis Example 10

In a 500 mL flask equipped with a thermometer, a stirrer, and a reflux condenser, 97.7 g (0.50 mol) of diphenyldimethoxysilane, 48.1 g (0.30 mol) of dimethyldimethoxysilane, 14.8 g (0.10 mol) of trimethoxyvinylsilane, 23.6 g (0.10 mol) of 3-glycidoxypropyltrimethoxysilane, 39.6 g (2.2 mol) of distilled water, and 0.6 g of sodium hydroxide were mixed. Thereafter, the mixture was agitated at 50°C for 1 hr, and then 184 g of toluene was added and agitated, and then allowed to stand still. After being left to stand still, the liquid separation was performed to take out an organic layer, and KW700 (available from Kyowa Chemical Industry Co., Ltd.) was added thereto until the mixture became neutral. After the neutralization, the toluene was removed to obtain an adhesion-imparting agent of the following average unit formula. The obtained adhesion-imparting agent was used as an adhesion-imparting agent X10.

(Ph₂SiO_{2/2})_{0.40}(Me₂SiO_{2/2})_{0.24}(ViSiO_{3/2})_{0.08}(EpSiO_{3/2})_{0.08}(RO_{1/2})_{0.20}

Note that R represents a hydrogen atom or a methyl group.

### Synthesis Example 11

In a 500 mL flask equipped with a thermometer, a stirrer, and a reflux condenser, 97.7 g (0.30 mol) of diphenyldimethoxysilane, 48.1 g (0.50 mol) of dimethyldimethoxysilane, 14.8 g (0.10 mol) of trimethoxyvinylsilane, 22.0 g (0.10 mol) of 3-glycidoxypropylmethyldimethoxysilane, 39.6 g (2.2 mol) of distilled water, and 0.6 g of sodium hydroxide were mixed. Thereafter, agitation was performed at 50°C for 6 hrs, then 184 g of toluene was added and agitated, and then the mixture was allowed to stand still. After being left to stand still, the liquid separation was performed to take out an organic layer, and KW700 (available from Kyowa Chemical Industry Co., Ltd.) was added thereto until the mixture became neutral. After the neutralization, the toluene was removed to obtain an adhesion-imparting agent of the following average unit formula. The obtained adhesion-imparting agent was used as an adhesion-imparting agent X11.

(Ph₂SiO_{2/2})_{0.29}(Me₂SiO_{2/2})_{0.49}(ViSiO_{3/2})_{0.09}(RO_{1/2})_{0.04}(EpMeSiO_{2/2})_{0.09}

Note that R represents a hydrogen atom or a methyl group.

For each of the adhesion-imparting agents, the number of moles of each siloxane unit (number of moles in the case where the total number of moles of the siloxane unit is 1 mole) and the like are collectively shown in Table 1.

**[Table 1-I]**

| Table 1 | Number of adhesion-imparting agent | a | | | b | c | d |
|---|---|---|---|---|---|---|---|
| | | Ph₂SiO_{2/2} | Me₂SiO_{2/2} | PhMeSiO_{2/2} | ViSiO_{3/2} | EpSiO_{3/2} | RO_{1/2} |
| Synthesis Example 1 | C1 | 0.29 | 0.49 | | 0.09 | 0.09 | 0.04 |
| Synthesis Example 2 | C2 | 0.29 | 0.49 | | 0.09 | 0.09 | 0.04 |
| Synthesis Example 3 | C3 | 0.29 | 0.49 | | 0.09 | 0.09 | 0.04 |
| Synthesis Example 4 | C4 | 0.29 | 0.49 | | 0.09 | 0.09 | 0.04 |
| Synthesis Example 5 | C5 | | | 0.78 | 0.09 | 0.09 | 0.04 |
| Synthesis Example 6 | C6 | 0.19 | 0.29 | | 0.19 | 0.29 | 0.04 |
| Synthesis Example 7 | X7 | 0.29 | 0.49 | | | 0.09 | 0.04 |
| Synthesis Example 8 | X8 | 0.48 | 0.28 | | 0.195 | 0.005 | 0.04 |
| Synthesis Example 9 | X9 | 0.50 | 0.30 | | 0.10 | 0.10 | |
| Synthesis Example 10 | X10 | 0.40 | 0.24 | | 0.08 | 0.08 | 0.20 |
| Synthesis Example 11 | X11 | 0.29 | 0.49 | | 0.09 | | 0.04 |

**[Table 1-2]**

| Table 1 | OTHERS | | a + b + c + d | c/(a + b + c) | d/(a + b + c) | d/(2a + b + c + d) | Proportion B [mol%] |
|---|---|---|---|---|---|---|---|
| | ViMe₂SiO_{1/2} | EpMeSi_{2/2} | | | | | |
| Synthesis Example 1 | | | 1.00 | 0.094 | 0.042 | 0.022 | 33% |
| Synthesis Example 2 | | | 1.00 | 0.094 | 0.042 | 0.022 | 33% |
| Synthesis Example 3 | | | 1.00 | 0.094 | 0.042 | 0.022 | 33% |
| Synthesis Example 4 | | | 1.00 | 0.094 | 0.042 | 0.022 | 33% |
| Synthesis Example 5 | | | 1.00 | 0.094 | 0.042 | 0.022 | 44% |
| Synthesis Example 6 | | | 1.00 | 0.302 | 0.042 | 0.027 | 26% |
| Synthesis Example 7 | 0.09 | | 0.91 | 0.103 | 0.046 | 0.024 | 30% |
| Synthesis Example 8 | | | 1.00 | 0.005 | 0.042 | 0.023 | 55% |
| Synthesis Example 9 | | | 1.00 | 0.100 | 0.000 | 0.000 | 56% |
| Synthesis Example 10 | | | 1.00 | 0.100 | 0.250 | 0.122 | 49% |
| Synthesis Example 11 | | 0.09 | 0.91 | 0.000 | 0.046 | 0.024 | 31% |

### Preparation of curable resin composition

Each curable resin composition was prepared by mixing components shown in Table 2 below in the proportion shown in the same table (values are in part by mass) (the proportions of D1 and E1 are as described in Table 2).

### Evaluation

The following evaluations were performed for the obtained curable resin composition.

### Red ink test

The obtained curable resin composition was filled in an LED package (package material: Epoxy Molding Compound (EMC)) and cured (at 100°C for 1 hour and then at 150°C for 2 hours). The obtained cured product (sealed body) was immersed in red ink together with the LED package (ethanol:water = 1:1) and taken out after 24 hours. The cured product was then observed by using a microscope. The sealed body through which the red ink permeated was evaluated as "failed", and the sealed body through which the red ink did not permeate was evaluated as "passed". The test described above was performed for 100 pieces of samples, and evaluation was performed based on the following criteria. The results are shown in Table 2. From the perspective of adhesive properties, "Excellent" or "Good" is preferable, and "Excellent" is more preferable.
Excellent: From 91 to 100 pieces were passed.
Good: From 81 to 90 pieces were passed.
Somewhat poor: From 71 to 80 pieces were passed.
Poor: At most 70 pieces were passed.

### Heat shock test

The cured product was obtained in accordance with the same procedure as in the red ink test described above. The obtained cured product (sealed body) was exposed to an environment at -40°C (30 minutes) and then to an environment at 125°C (30 minutes), and this was repeated for 500 cycles. The case in which delamination of the sealed body was observed was evaluated as "failed", and the case in which delamination of the sealed body was not observed was evaluated as "passed". The test described above was performed for 100 pieces of samples, and evaluation was performed based on the following criteria. The results are shown in Table 2. From the perspective of adhesive properties, "Excellent" or "Good" is preferable, and "Excellent" is more preferable.
Excellent: From 91 to 100 pieces were passed.
Good: From 81 to 90 pieces were passed.
Somewhat poor: From 71 to 80 pieces were passed.
Poor: At most 70 pieces were passed.

**[Table 2-I]**

| Table 2 | Example 1 | Example 2 | Example 3 | Example 4 | Example 5 | Example 6 |
|---|---|---|---|---|---|---|
| A1 | 50 | 50 | 50 | 50 | 50 | 50 |
| A2 | 50 | 50 | 50 | 50 | 50 | 50 |
| A3 | | | | | | |
| B1 | 24 | 24 | 24 | 24 | 24 | 24 |
| B2 | | | | | | |
| B3 | | | | | | |
| B4 | | | | | | |
| C1 | 5 | | | | | |
| C2 | | 5 | | | | |
| C3 | | | 5 | | | |
| C4 | | | | 5 | | |
| C5 | | | | | 5 | |
| C6 | | | | | | 5 |
| X7 | | | | | | |
| X8 | | | | | | |
| X9 | | | | | | |
| X10 | | | | | | |
| X11 | | | | | | |
| D1 | An amount by which the mass of platinum atom contained in D1 relative to the total mass of each of the curable resin composition became 3 ppm | | | | | |
| E1 | An amount by which the mass of E1 relative to the total mass of each of the curable resin composition became 500 ppm | | | | | |
| Si-H/Si-Vi molar ratio | 1.00 | 1.00 | 1.00 | 1.00 | 1.00 | 1.00 |
| Red ink test | Excellent | Excellent | Good | Excellent | Good | Good |
| Heat shock test | Good | Good | Good | Excellent | Good | Good |

**[Table 2-II]**

| Table 2 | Example 8 | Example 9 | Example 10 | Example 11 | Example 12 | Example 13 |
|---|---|---|---|---|---|---|
| A1 | 50 | 50 | 50 | | | |
| A2 | | 50 | 50 | 50 | 50 | 50 |
| A3 | 50 | | | 50 | 50 | 50 |
| B1 | 36 | 24 | | 46 | | 45 |
| B2 | | | 39 | | 74 | |
| B3 | 5 | | 5 | | | |
| B4 | | 50 | | | | 50 |
| C1 | 5 | 5 | 5 | 5 | 5 | 5 |
| C2 | | | | | | |
| C3 | | | | | | |
| C4 | | | | | | |
| C5 | | | | | | |
| C6 | | | | | | |
| X7 | | | | | | |
| X8 | | | | | | |
| X9 | | | | | | |
| X10 | | | | | | |
| X11 | | | | | | |
| D1 | An amount by which the mass of platinum atom contained in D1 relative to the total mass of each of the curable resin composition became 3 ppm | | | | | |
| E1 | An amount by which the mass of E1 relative to the total mass of each of the curable resin composition became 500 ppm | | | | | |
| Si-H/Si-Vi molar ratio | 1.01 | 1.00 | 1.00 | 0.99 | 0.99 | 0.97 |
| Red ink test | Excellent | Excellent | Excellent | Excellent | Excellent | Good |
| Heat shock test | Good | Good | Good | Good | Good | Good |

**[Table 2-III]**

| Table 2 | Comparative Example 1 | Comparative Example 2 | Comparative Example 3 | Comparative Example 4 | Comparative Example 5 |
|---|---|---|---|---|---|
| A1 | 50 | 50 | 50 | 50 | 50 |
| A2 | 50 | 50 | 50 | 50 | 50 |
| A3 | | | | | |
| B1 | 24 | 24 | 24 | 24 | 24 |
| B2 | | | | | |
| B3 | | | | | |
| B4 | | | | | |
| C1 | | | | | |
| C2 | | | | | |
| C3 | | | | | |
| C4 | | | | | |
| C5 | | | | | |
| C6 | | | | | |
| X7 | 5 | | | | |
| X8 | | 5 | | | |
| X9 | | | 5 | | |
| X10 | | | | 5 | |
| X11 | | | | | 5 |
| D1 | An amount by which the mass of platinum atom contained in D1 relative to the total mass of each of the curable resin composition became 3 ppm | | | | |
| E1 | An amount by which the mass of E1 relative to the total mass of each of the curable resin composition became 500 ppm | | | | |
| Si-H/Si-Vi molar ratio | 1.00 | 1.00 | 1.00 | 1.00 | 1.00 |
| Red ink test | Poor | Poor | Poor | Poor | Poor |
| Heat shock test | Poor | Poor | Poor | Poor | Poor |

Each of A1 to A3, B1 to B4, C1 to C6, X7 to X11, D1, and E1 in Table 2 is as described below.
- A1: both-ends vinyl-terminated methylphenylpolysiloxane (PMV-9225, available from AZmax)
- A2: polysiloxane represented by the average unit formula:
   (PhSiO_{3/2})_{0.75}(ViMe₂SiO_{1/2})_{0.25} (available from The Yokohama Rubber Co., Ltd.)
- A3: polysiloxane represented by the average unit formula:
   (PhSiO_{3/2})_{0.60}(ViMe₂SiO_{1/2})_{0.40} (available from The Yokohama Rubber Co., Ltd.)
- B1: polysiloxane represented by the average unit formula:
   (Ph₂SiO_{2/2})_{0.33}(HMe₂SiO_{1/2})_{0.67} (available from The Yokohama Rubber Co., Ltd.)
- B2: polysiloxane represented by the average unit formula:
   (Ph₂SiO_{2/2})_{0.50}(HMe₂SiO_{1/2})_{0.50} (available from The Yokohama Rubber Co., Ltd.)
- B3: polysiloxane represented by the average unit formula:
   (PhMeSiO_{2/2})_{0.60}(HMe₂SiO_{1/2})_{0.40} (available from The Yokohama Rubber Co., Ltd.)
- B4: polysiloxane represented by the average unit formula:
   (PhMeSiO_{2/2})_{0.99}(HMe₂SiO_{1/2})_{0.01} (available from The Yokohama Rubber Co., Ltd.)
- C1 to C6: the adhesion-imparting agents C1 to C6 described above
- X7 to X11: the adhesion-imparting agents X7 to X11 described above
- D1: Pt 1,3-divinyltetramethyldisiloxane complex (available from Umicore)
- E1: ethynylcyclohexanol (available from Tokyo Chemical Industry Co., Ltd.)

As is clear from Table 2, the curable resin compositions containing the adhesion-imparting agents that were the specific polysiloxanes (Examples 1 to 13) exhibited excellent adhesive properties.
From the comparison of Examples 1 to 4, Example 1 in which diphenyldimethoxysilane was used as the starting material, Example 2 in which diphenylsilane was used as the starting material, and Example 4 in which diphenyldisilanol was used as the starting material exhibited even better adhesive properties. Among these, Example 4 in which diphenyldisilanol was used as the starting material exhibited yet even better adhesive properties.
From the comparison between Examples 1 and 5, Example 1 in which the specific polysiloxane contained, as the siloxane unit (a), the siloxane unit having aryl groups having from 6 to 20 carbons (preferably phenyl groups) as both R¹¹ and R¹² in the average unit formula (1) described above and a siloxane unit having alkyl groups having from 1 to 20 carbons as both R¹¹ and R¹² in the average unit formula (1) described above exhibited even better adhesive properties.
From the comparison between Examples 1 and 6, Example 1 in which a in the average unit formula (1) was 0.60 or greater exhibited even better adhesive properties.
From the comparison of Examples 1 and 8 to 13, Examples 1 and 8 to 12 in which the Si-H/Si-Vi molar ratio was 0.98 or greater exhibited even better adhesive properties.

On the other hand, Comparative Examples 1 to 5 which did not contain the specific polysiloxane exhibited insufficient adhesive properties.

## Claims

1. An adhesion-imparting agent, the adhesion-imparting agent being an organopolysiloxane represented by average unit formula (1) below:
(R¹¹R¹²SiO_{2/2})ₐ(R²SiO_{3/2})_{b}(R³SiO_{3/2})_{c}(R⁴O_{1/2})_{d} ··· (1)
wherein, R¹¹ and R¹² each independently represent an aryl group having from 6 to 20 carbons or an alkyl group having from 1 to 20 carbons, R² represents an alkenyl group, R³ represents an epoxy group-containing group or an oxetanyl group-containing group, and R⁴ represents a hydrogen atom or an alkyl group having from 1 to 10 carbons; and a, b, c, and d are each a positive number and satisfy relationship formulas of 0.80 ≤ a + b + c + d ≤ 1.00, c/(a + b + c) > 0.01, d/(a + b + c) > 0.02, and d/(2a + b + c + d) < 0.05.

2. The adhesion-imparting agent according to claim 1, wherein
a proportion of an aryl group to all silicon atom-bonded groups is 5.0 mol% or greater.

3. The adhesion-imparting agent according to claim 1 or 2, wherein,
in the average unit formula (1), both R¹¹ and R¹² are phenyl groups.

4. The adhesion-imparting agent according to claim 3, wherein diphenylsilane, diphenyldichlorosilane, diphenyldialkoxysilane, or diphenyldisilanol is used as a starting material.

5. The adhesion-imparting agent according to claim 4, wherein diphenyldisilanol is used as the starting material.

6. The adhesion-imparting agent according to any one of claims 1 to 5, wherein,
in the average unit formula (1), the epoxy group-containing group or the oxetanyl group-containing group represented by R³ is a glycidoxyalkyl group, an epoxycycloalkyl group, or an oxetanylalkyl group-containing group.

7. A curable resin composition comprising:
an organopolysiloxane A having a silicon atom-bonded alkenyl group and a silicon atom-bonded aryl group;
an organopolysiloxane B having a silicon atom-bonded hydrogen atom and a silicon atom-bonded aryl group;
the adhesion-imparting agent described in any one of claims 1 to 6; and
a hydrosilylation catalyst,
a content of the adhesion-imparting agent being from 0.01 to 10 parts by mass per 100 parts by mass total of the organopolysiloxane A and the organopolysiloxane B.
